Europäisches Patentamt

(19) European Patent Office

Office européen des brevets

(11) Publication number: **0 099 229**
**A2**

## (12) EUROPEAN PATENT APPLICATION

(21) Application number: **83303911.8**

(22) Date of filing: **05.07.83**

(51) Int. Cl.³: **G 06 K 9/60**

(30) Priority: **08.07.82 JP 119073/82**
**08.06.83 JP 102350/83**

(43) Date of publication of application:
**25.01.84 Bulletin 84/4**

(84) Designated Contracting States:
**DE FR GB IT NL SE**

(71) Applicant: **MITSUBISHI RAYON CO. LTD.**
**3-19, Kyobashi 2-chome Chuo-Ku**
**Tokyo 104(JP)**

(72) Inventor: **Ooe, Akihiko**
**1118-425, Oaza Komatsuji**
**Komaki-shi(JP)**

(72) Inventor: **Fuse, Masaki**
**13-2-201, Kibogaoka-1-chome**
**Chikusa-ku Nagoya(JP)**

(74) Representative: **Bannerman, David Gardner et al,**
**Withers & Rogers 4 Dyer's Buildings Holborn**
**London, EC1N 2JT(GB)**

(54) Image measuring system.

(57) A solid state image sensing device (3) of the line scan type is primary scanned in a direction of the alignment of sensor elements and auxiliary scanned mechanically in a direction perpendicular to the primary scanning to produce an image signal of a sample containing a plurality of objects (1) to be examined. Image signals respectively obtained in two successive primary scannings are correlated with each other in a measuring circuit (5) to determine whether an image portion sensed in one of the two primary scannings is in continuity with any one or more of the image portions sensed in the other primary scanning. By repeating this process of correlation between two successive primary scannings sequentially until the whole surface of the sample is scanned, the area and shape of each of images of the objects are measured. An output correction circuit (4) corrects the image signal from the solid state image sensing device (3) with respect to the output irregularity due to difference in sensitivity of sensor elements and due to non-uniformity of illumination of the objects.

EP 0 099 229 A2

## IMAGE MEASURING SYSTEM

The present invention relates to an image signal processing system, and more particularly, to an image measuring system for measuring the color, size, shape, the number, etc., of various objects to be measured.

The objects to be measured include those depending on various application fields, blood cells magnified by a microscope in the medical field, powder of various kinds in the fields of medicine and food, and printed wires in the field of electronics. These objects have hitherto examined visually by the use of microscopes. However, as the number of objects or samples to be measured at one time increases due to, for example, a group medical examination, and measurement of mass produced materials, the examination or measurement of these objects requires a great deal of human works, and hence automation is needed.

In order to meet these requirements, many image processing systems have been proposed. Most of them use a television camera as a scanner. Parameters to be measured include area, diameter and the number of objects, etc. A measuring circuit to perform high speed processing of image signal is built in some of these systems.

For a program package having a function of measurement of an object, there are some which have been known, such as a "universal image processing software package SPIDER" (Electrotechnical Laboratory, Ibaragi Prefecture, Japan) and "image processing subroutine library SLIP" (the university of Nagoya, Japan).

Typical characteristics of a television (TV) camera used in the usual image processing system are that no mechanical movement of an object is necessary, and that the image information can be read in a single high speed scanning.  On the other hand, there are some problems such as poor resolution, low discrimination capability between dark and light, poor accuracy of defining a position, and frequent occurrence of persistence.

The program packages have various kinds of measurement functions, as described in the foregoing, however, there are difficulties in that they are impractical due to a long processing time, although they are suitable for study purposes.

Although the TV camera can read the image information in a single high speed scanning, when there are many images of objects in a picture, and when all of these images are needed to be analyzed, the quantity of information becomes too large.  So long as the image information is not fully analyzed at one time, no effective use of the TV camera is made. For example, if 15,000 cells in an area of 1 cm square are to be examined, the number of picture elements of about $10^8$ must be processed, supposing that the area of one picture element is 1 µm square. In the case of a classification system of white blood corpuscules, a cell must be processed one by one through reading of a part of a slide glass by the TV camera, and thereafter the slide glass is moved in the X and Y axis directions several times intermittently. This method requires a long processing time. Therefore, the practical merit is low. Further, there are defects in that the movements of the slide glass are complicated, the accuracy of position of the image by the TV camera is not good, and that the persistence tends to appear.

On the other hand, when a solid state image sensing device of the line scan type is employed, all the elements contained in the device do not always have the same sensitivity. Therefore, irregularity appears in the output due to the variation of the sensitivity of elements, even if an object with uniform color density is scanned. This defect would not be caused with a single element device. Furthermore, even with an object of uniform color density, if there is an irregularity in illumination, the output will not be uniform.

The present invention utilizes a solid state image sensing device of the line scan type which has a high resolution and accuracy in a position measurement. In measuring an object, the image of the object

- 4 -

0099229

sensed by the image sensing device is read out along one coordinate axis at one time, and the output signals are sequentially processed line by line. The primary scanning is achieved by a scanning circuit associated with the solid state image sensing device of the line scan type while the auxiliary scanning is performed by a mechanical system thereby to solve the problem of the persistence. The focus is automatically adjusted and the irregularity of output signal contained in the image signal produced by the primary scanning is corrected thereby to remove the irregularity of the sensitivity of individual elements inherent in the solid state image sensing device of the line scan type and also at the same time to eliminate the influence of illumination irregularity, so that the measurement of the color density of the object is also improved and the capability of discriminating between light and dark colors of the object is enhanced. Thus, this invention provides an image measuring system which can measure the color, size, shape and the number of an object or objects to be measured rapidly and accurately.

Image information in two scanned lines are derived sequentially so that a plurality of images contained in an object may be discriminated. Only those data relating to the complexity of the shape and other phisical features of each image obtained by the discrimination are stored in a memory. Hence, the capacity of the memory may be small.

The image measuring system in the present invention measures various physical features of an object or objects on the basis of an image of the object or objects including a plurality of picture elements in the image. The image measuring system includes at least the following means:

1) a scanning means including means for effecting a primary scanning of a solid state image sensing device of the line scan type and means for performing an auxiliary scanning by the use of a mechanical system,

2) means for adjusting the focus of an optical system automatically,

3) means for correcting the irregularity of output contained in the image signal which is obtained by the primary scanning,

4) means for discriminating a plurality of image groups contained in the measured object from the image signal, after the output irregularity has been corrected.

Detailed explanation of the invention will be made hereinafter with reference to the drawings, in which;

Fig. 1 is a block diagram of an image measuring system according to the present invention,

Fig. 2 is a block diagram of an automatic focusing mechanism in Fig. 1,

Fig. 3 is a graph for explaining the operation of the automatic focusing mechanism,

Fig. 4 is a block diagram of an output irregularity correction circuit in Fig. 1,

Fig. 5 is a block diagram of a measuring circuit of Fig. 1 in which the image discrimination is processed,

Fig. 6A and 6B are diagrams for explaining the process of the image discrimination,

Figs. 7A and 7B are diagrams showing examples of the image discrimination performed in the measuring circuit in Fig. 1, and

Fig. 8 is a flow chart showing the measurement procedure of parameters performed in the measuring circuit in Fig. 1.

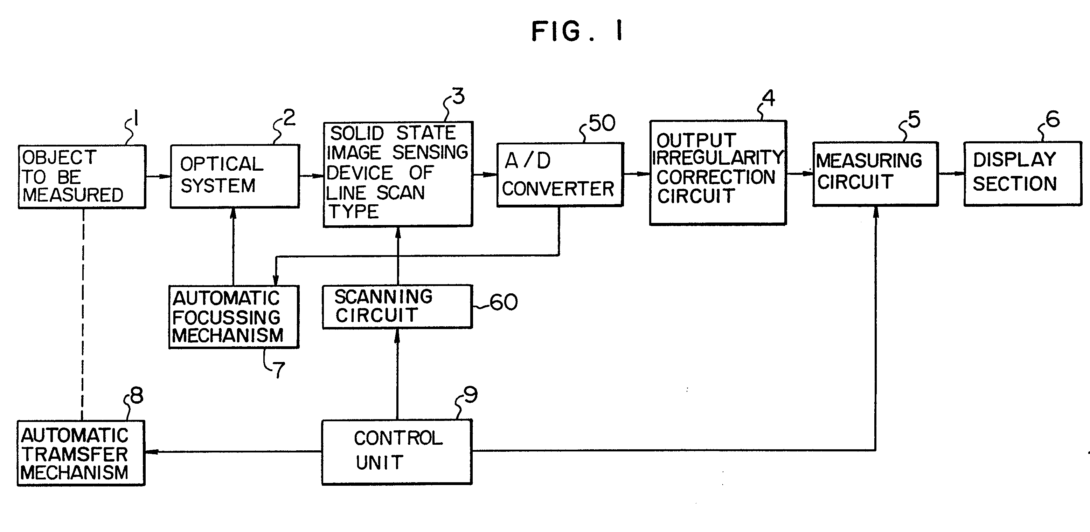

In Fig. 1, an object or objects 1 to be measured is moved in a direction perpendicular to the axis of an optical system 2 by an automatic transfer mechanism 8. The focussing is automatically adjusted by an automatic focussing mechanism 7 during the measurement of the object 1. The object 1 is read by a solid state image sensing device 3 of the line scan type through an optical system 2. A direction of arrangement of image sensing elements of the image sensing device 3 is perpendicular to the direction of movement of the object 1. When the object 1 is moved at a constant speed, the image sensing device 3 reads the information in one line of the object 1 corresponding to the alignment of the image sensing elements through the optical system 2 at one time, and generates an image signal representing the brightness of the object 1.   In an output irregularity correction circuit 4, after the image signal has been analog to digital converted by an A/D converter 50, the image signal is corrected by using a reference data preliminarily measured as described hereinafter.  Thus, a corrected image signal is generated.  In a measuring circuit 5 of the following stage, parameters representing physical features of the object or objects, such as the number, size, shape, color, etc., of the images corresponding to the objects are measured.  The results of the measurement are supplied to a display section 6.  A control unit 9 delivers a timing signal to the automatic transfer mechanism 8, the solid state image sensing device 3, and the measuring circuit 5 to synchronize the operations thereof.

For illuminating the object 1, it is preferable to use as a light source a halogen lamp (not shown).  The quantity of light is adjusted taking into account of the saturation exposure of the solid state image sensing device 3 and the scanning speed.  For example, if the saturation exposure is 0.4 Lux.sec. and the scanning speed is 100 scans/sec., it is preferable to adjust the light source such that the brightness of the light receiving surface of the solid state image sensing device 3 is 40 Lux.

The automatic focusing mechanism 7 may be operated on the principles of the high frequency component analyzing method, the quantity of light checking method, the touch sensor method, and the air-micro method (micrometer method using air system wherein, by keeping the back pressure constant by blowing air, the distance between speciemen and nozzle is kept constant). Any of these methods may be applicable depending on the nature of the object to be measured. However, it is more preferable to adjust the focussing on the basis of the information itself obtained by sensing the object by the solid state image sensing device. In more detail, as a measure for optimal focussing a sum of difference values between adjacent picture elements of a group of image signals obtained by sensing the object by the above-mentioned solid state image sensing device. After the distance between the object and the image sensing device has been set at an arbitrary distance, the set distance is varied at a constant pitch P in a direction to approache the correct focussed position. Comparison is made between the sum values respectively obtained before and after this variation. This operation is repeated until the sum value after the variation becomes smaller than that before the variation. Then, (a) the distance is further varied to the opposite direction with a pitch smaller than the pitch P from the position after the final variation, or (b) after the position of the final variation is returned to the opposite direction by a distance corresponding to 1 to 1.5 times the pitch P (1 - 1.5P) the distance is varied again with a pitch Q which is smaller than the P in the forward direction. Then, comparison is made between the sum values respectively obtained before and after the variation. This operation is repeated until the sum value after the variation becomes smaller than that before the variation. The position before the final variation or after the final variation is determined as an optimal focussed position. The focussing method described above is based on the findings that as the focussing is adjusted more correctly, the difference in brightness between the adjacent picture elements increases, and hence the sum of the difference values between the picture elements increases.

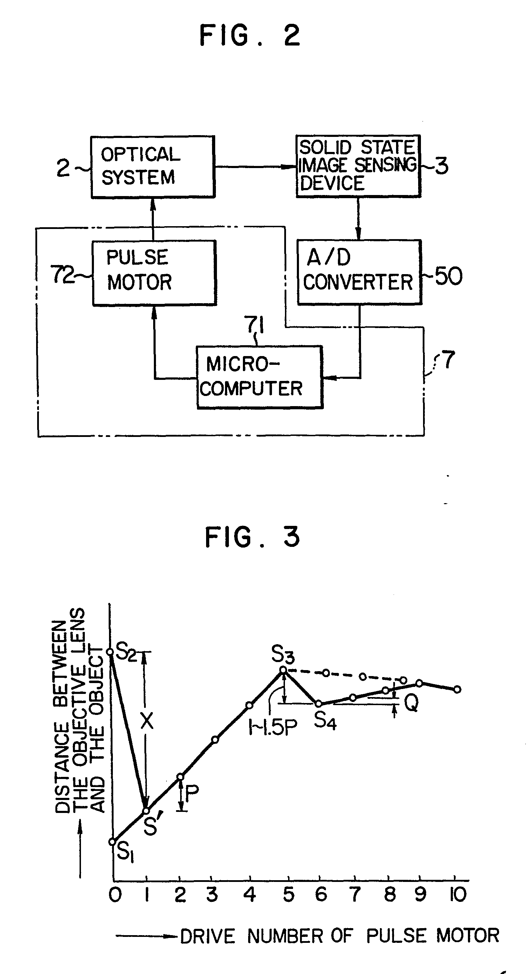

The focussing method is suitable to such a case in which a microscope is used in the optical system. Therefore, an explanation will be made referring to Fig. 2 as to an example in which the microscope (not shown) is used. The image signal from the solid state image sensing device 3 of the line scan type mounted on a cylinder of the microscope is supplied to a microcomputer 71 through an A/D converter 50 to obtain a sum of the difference values between adjacent picture elements. This process is repeated by driving a pulse motor 72 mounted on a minute adjustment dial of the microscope. The above-mentioned sum value is calculated before and after the drive of the pulse motor 72. A position of an optimal focussed point is determined when a position with the largest sum value is attained. Instead of the provision of the A/D converter 50 and the microcomputer 71, it may be appropriate to calculate the sum by the measuring circuit 5 (in Fig. 1) through the output irregularity correction circuit 4 and to feed the calculated sum back to the automatic focussing mechanism 7.

Referring to Fig. 3, when the automatic focusing mechanism 7 is activated, a sum of the above-mentioned differences is calculated at an arbitrarily set position $S_2$ or at a position S' apart from $S_2$ by a distance X, e.g., about 20 μm toward the object. The distance is varied with a pitch P from the position S' in a direction to approach an optimal focussed point, and the sum value of differences is calculated again. The sum values before and after the drive of the pulse motor 72 are compared with each other. If the latter value is larger than the former value, the same process is repeated until the latter value becomes smaller. Here, the direction to approach the optimal focussed point coincides with a direction in which a larger sum value is obtained after the drive than that before the drive of the pulse motor 72. Therefore, if a direction to approach the correct focussed point is unknown, the position is first varied by the pitch P in an arbitrary direction. A direction of further variation of the position is determined by a comparison between the sum values before and after the movement. If the latter sum value is smaller than the former sum value, the position $S_3$ is changed in the reverse direction with a pitch Q smaller than the pitch P as shown by the dotted line, or returned to a position $S_4$ by a distance corresponding to 1.0 to 1.5P and then moved in the forward direction with the pitch Q. Then, a similar process is repeated as described above. If a sum value becomes smaller than that before the drive of the pulse motor 72, the position before the drive is considered the correct focussed position. Even if the position after the Drive is used as the correct focussed position, adverse effect will be small in the practical measurement of the object in accordance with the principles of this invention.

Although, it is desirable that the initially set distance between the object and the objective lens of the microscope is sufficiently near the correctly focussed distance, rough adjustment with the naked eyes in a usual manner will be sufficient. When a plurality of samples are to be measured successively, the position of the objective lens in the last measurement may be taken as a starting position for the focussing in the next measurement. The initially set distance may be either larger or smaller than the correctly focussed distance. If it is smaller, a focussed position of the object when the objective lens is positioned at $S_1$ is within the slide glass (not shown).  Hence, even if a particle of dust is deposited on the surface of the cover glass (not shown), before the dust is focussed, the correctly focussed position with respect to the object can be reached. For this reason, the smaller set distance is preferable in order to prevent the dust, etc., from being brought to a focus by mistake before the object is focussed.  For example, in Fig. 3, the position S' is better than the position S as the starting point.

The values of pitches P and Q may be arbitrarily chosen, so long as the pitch P is larger than the pitch Q.  It is preferable that the value of Q is in a range from equal to the depth of focus to 1/4 of the depth of focus of an optical apparatus employed.  It may be more preferable that the pitch Q is 1/4 to 1/2 of the depth of focus.  It is preferable that the value of P is twice to ten times the value of Q, or 3 to 6 times the value of Q.

If the pitches P and Q are larger than these values, the finally obtained focussed position of the objective lens will not sufficiently approach the correctly forcussed position resulting in a blurred image of the object.  If the pitches P and Q are smaller than the above-mentioned values, the image becomes sufficiently clear, but the time required for the focus adjustment will be too long.

Next, explanation will be made as to the

- 13 - 0099229

output irregularity correction circuit 4 in which the irregularity of output due to irregularity in sensitivity of the elements of the solid state image sensing device 3 and due to irregularity of illumination of the elements. For the purpose of explanation, it is supposed that the output from a background is smaller than the output from the image portion of the object. First, a group of signals $A_i$ (i=1 to n, n= the number of sensor elements contained in the image sensing device representing one scanning line information obtained by the primary scanning of a reference object having a uniform color density is recorded. Next, for each scanning line, a group of image signals $B_i$ (i=1 to n) obtained by scanning an object to be measured is subtracted from the group of signals $A_i$. The groups of signals $A_i$ and $B_i$ are digitized and represent digital values. That is, $A_i - B_i$ (i=1 to n) is calculated to correct the illumination irregularity with respect to the reference object. The values of $(A_i - B_i)$ is multiplied by $K/A_i$ to obtain $K(A_i - B_i)/A_i$ correct the irregularity of the sensitivity of the elements of the image sensing device, where K is the constant and K is preferably a maximum value of $A_i$ (i=1 to n).

By calculating the subtraction $A_i - B_i$, the absorption of light in the background (absorption in a slide glass) is eliminated and the quantity of absorption only by the object is obtained. In the irregularity of illumination, the absolute value of the brightness is varried for each sensor element, and in the irregularity of sensitivity, the output value of each sensor element varies under the same brightness. By calculating the division of $A_i - B_i$ by $A_i$, that is, by dividing by each of $A_i$ ($A_1$, $A_2$ ... $A_n$), more accurate output with respect to the color density can be obtained.

In order to obtain the value of $A_i$, a portion of the picture consisting only of the background of the image of the object is used. If the value of $A_i - A_i$ is negative, it is preferable to put $A_i - B_i = 0$. Further, it is desirable to record the value of $A_i$ every time when the distance between the image sensing device and the object, the illumination condition, and the picking up condition such as the stop of lens are varied. In this way, it is possible to correct the illumination irregularity and the sensitivity variation of the elements and to obtain accurate information of the image of the object to be measured. As an alternative, it may be possible to use $KB_i/A_i$ (i=1 to n) as a correction value.

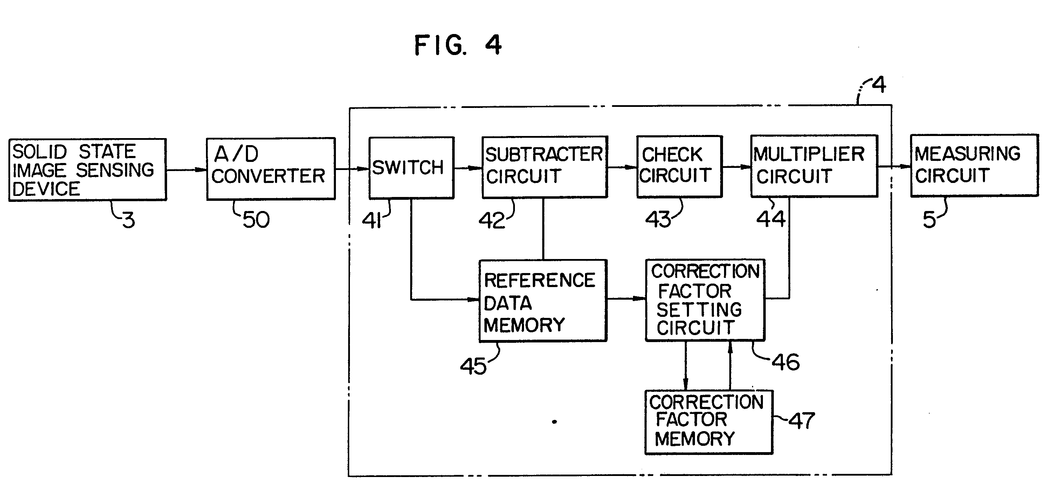

Fig. 4 is a block diagram of the output irregularity correction circuit 4 to achieve the correction described in the foregoing. A switch 41 is provided to change over the output signal from the solid state image sensing device 3 through the A/D converter 50 depending upon whether the reference object is being measured or the object is being measured. The group of signals $A_i$ is supplied to a reference data memory 45 to be stored therein and, at the same time, the reciprocal of $A_i$ is obtained to be used as a correction factor in a correction factor setting circuit 46. The correction factor $K/A_i$ is stored in a correction factor memory 47. The group of signals $B_i$ is supplied through the switch 41 to a subtractor circuit 42, and $A_i - B_i$ is calculated. A check circuit 43 determines whether the calculated $A_i - B_i$ is O or negative, and if it is negative, $A_i - B_i$ made to be O. A multiplier circuit 44 calculates $K(A_i - B_i)/A_i$ to produce the corrected value which is supplied to the measuring circuit 5.

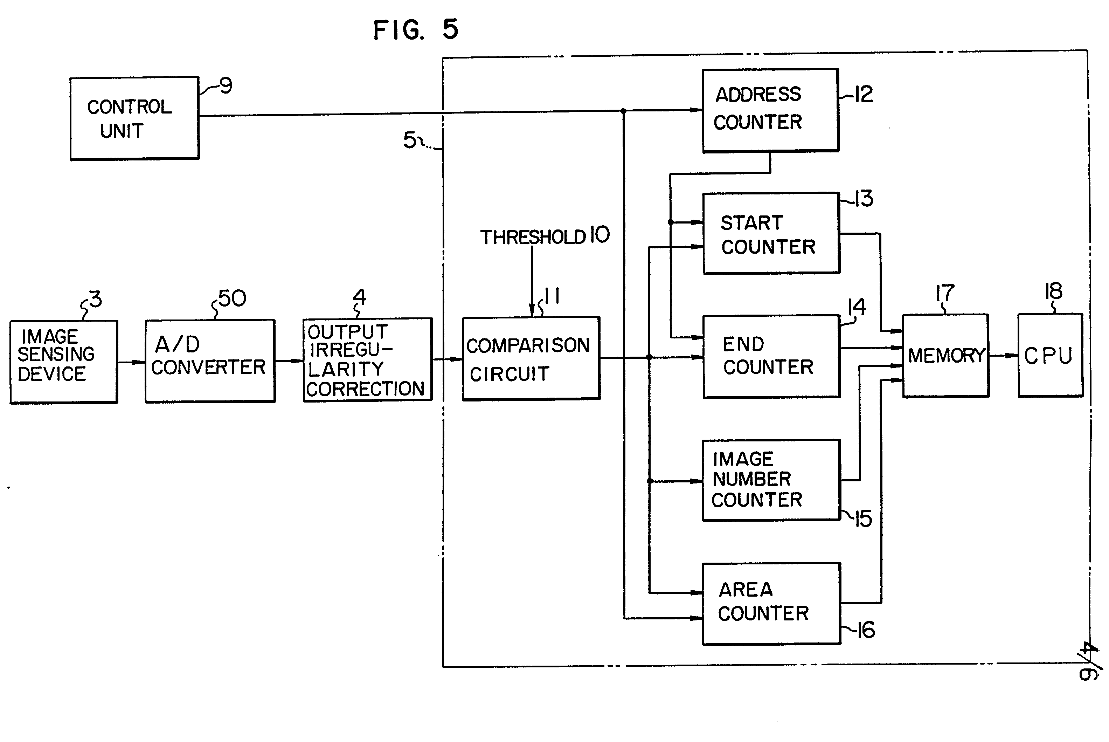

The measuring circuit 5 will be described in detail referring to Fig. 5, in which an image recognition is performed. In order to discriminate the output corresponding to the image of the object from the background among the output values obtained by the primary scanning and corrected with respect to the output irregularity. The value $K(A_i - B_i)/A_i$ is used as the corrected output value, where $A_i$ is the output corresponding to a reference object such as the background portion of the picture. The output value $K(A_i - B_i)/A_i$ corresponding to the background is zero or nearly zero while the output value corresponding to the image of the object is larger than the background value. Then, a suitable intermediate value is selected as a threshold. If the output value is larger than this threshold, it is judged that at least a part of the image of the object exists on a position corresponding to the output.  This ensures the discrimination between the image of the object and the background.  Furthermore, if the output values in the primary scanning of adjacent elements (called as picture elements) are both above the threshold, it is judged that the both picture elements belong to one image.  For each primary scanning, it is judged whether at least a part of an image contained in the primary scanning is contiguous or adjacent to at least a part of another image contained in the just preceding primary scanning.  In this manner, it is discriminated if any images in two successive primary scannings (adjacent two scannings) belong to one image.

The measuring circuit 5 includes a circuit 11 for comparing the corrected output of the solid state image sensing device 3 obtained for each primary scanning with a preliminarily set threshold 10, an address counter 12 for counting a clock from the control unit 9, and a start position counter 13 and an end position counter 14 for holding addresses at left and right ends of the image in the primary scanning. Preferably, the measuring circuit 5 further includes an image number counter 15 for recording the number of start positions appearing for each primary scanned line and an area counter 16 for holding a difference between the end position and the start position of the image in the primary scanned line.

In the operation, output values $C_i$ (i=1 to n) of the solid state image sensing device 3 after correction of irregularity in output are digitized by the A/D converter 50 and supplied to the comparison circuit 11, where $C_i$ are compared with the threshold 10 preliminarily set. Counters 13 to 16 of various kinds are operated in accordance with the result of the comparison. The address counter 12 receives the start signal and the clock pulse from the control circuit 9 and counts up the number of elements in synchronization with the clock pulse so that a count value indicates an element number i under processing. This element number i is transferred to the start position counter 13 and the end position counter 14. The start position counter 13 sets the content of the address counter 12 (called as a start position address and denoted as $C_j{}^S$), when $C_{i-1}$ is smaller and $C_i$ is larger than the threshold.

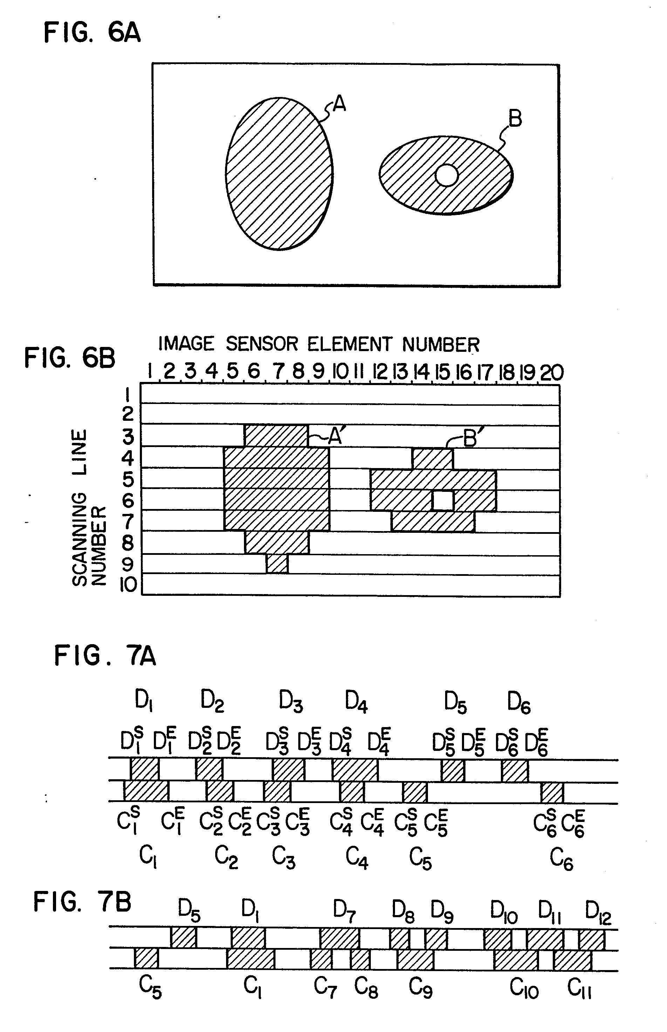

Fig. 6A shows objects A and B to be measured, and Fig. 6B shows the result of reading the object and comparison of the corrected value with the threshold. The shaded regions A' and B' indicate where the output value is larger than the threshold, that is, recognized as images of the objects A and B. On the 4-th row or the 4-th scanning line, the start position addresses are respectively Nos. 5 and 14 elements. On the 6-th scanning line, the start position addresses are Nos. 5, 12 and 16 elements.  The end position counter 14 sets the value of i (called as an end position address and denoted as $C_j^E$) when $C_i$ is larger and $C_{i+1}$ is smaller than the threshold.  In Fig. 6B, end addresses on the 4-th scanning line are Nos. 9 and 15 and, those on 6-th scanning line are Nos. 9, 14 and 17.  The image number counter 15 sets the number of the start position addresses that have been set.  This number indicates the order (or a serial number) of an image under observation of the data which are obtained by imaging through the solid state image device of line scan type (the number is denoted as j and is used as $C_j^S$ and $C_j^E$) in one primary scanning.  That is, the value of j amounted at the end of The primary scanning indicates the number of images contained in the one primary scanning.  For each image, $B_j^E - B_j^S + 1$ (number of elements between the start position address and the end position address) is set in the area counter 16.

In the process of setting a value in the counters 13 to 16, if the start position counter 13 is set after the end position counter 14 is set, the previous set value of the start position counter 13 has to be updated.  In order to hold these previous set value, an area address corresponding to the value j of the image number counter 15 is set in a memory 17 after the end position counter 14 has been set.  The contents of the counters 13 to 16 are stored in an area having the area address in the memory 17.  At each end of the primary scanning for one line or at each set of the end position counter 14, a comparison is made between the positions of the images contained in the primary scanning and those of the images contained in the just preceding primary scanning. Discrimination is made whether the images contained in both scannings belong to one image. Now, let us denote $D_i{}^S$ and $D_i{}^E$ as the start position and the end position of the i-th recognized image of the previous scanning and $C_i{}^S$ and $C_j{}^E$ as those of the j-th recognized image $C_j$ of the present scanning, respectively. The above-mentioned discrimination is made by the values of $D_j{}^S$, $D_i{}^E$, $C_j{}^S$ and $C_j{}^E$. Fig. 7A shows a correlation between the images $C_j$ and $D_i$, where i,j=1 to 4 show examples having a connection between them while i=5, j=5; i=6, j=6 show examples without any connection. From the Fig. 7A, the correlation (comparison of values) among $D_i{}^S$, $D_i{}^E$, $C_j{}^S$ and $C_j{}^E$ (i,j=1 to 6) are as follows.

$$D_1 \text{ and } C_1: \quad C_1{}^S \leq D_1{}^S \leq D_1{}^E \leq C_1{}^E,$$
$$D_2 \text{ and } C_2: \quad D_2{}^S \leq C_2{}^S \leq D_2{}^E \leq D_2{}^E,$$
$$D_3 \text{ and } C_3: \quad C_3{}^S \leq D_3{}^S \leq C_3{}^E \leq D_3{}^E,$$
$$D_4 \text{ and } C_4: \quad D_4{}^S \leq C_4{}^S \leq C_4{}^E \leq D_4{}^E,$$
$$D_5 \text{ and } C_5: \quad C_5{}^S \leq C_5{}^E < D_5{}^S \leq D_5{}^E,$$
$$D_6 \text{ and } C_6: \quad D_6{}^S \leq D_6{}^E < C_6{}^S \leq C_6{}^E.$$

As will be apparent from the above relations, if the start position address of one image in the one of these

- 20 -     0099229

two primary canning is larger than the end position address of the other image in the other scanning, i.e. $C_j^E < D_j^S$ or $D_i^E < C_j^S$, the images in both scannings do not belong to one image. In the other case, the images on both scannings belong to the one image (both images are connected).

Further, in order to investigate the relation between the images contained in adjacent two primary scannings to clarify the complexity of the image shape, this relation is classified into six kinds: generation, termination, continuity, branch, convergence and mixture. As shown in Fig. 7B, if an image $C_5$ contained in the present primary scanning is not connected to any of the images in the preceding primary scanning, it is con- sidered that this image $C_5$ has appeared for the first time in the present primary scanning. This state is designated as "generation" of an image. In this case, an address is prepared for this new image. Data relating to a start position address $C_5^S$, end position address $C_5^E$, and area count value, etc., of the image $C_5$ are stored in the address. $D_5$ denotes an image con- tained in the preceding scanned line. This image $D_5$ is not connected or coupled to any of the images contained in the present scanned line. This state is designated as "termination". Except for "branch" and "mixture", described hereinafter, data of the images $D_5$, such as position area and complexity, etc. of the images are decided upon confirming the "termination".

In Fig. 7B, an image $D_1$ belonging to the preceding scanned line and an image $C_1$ belonging to the present scanned line are connected. This means that images $D_1$ and $C_1$ belong to one image. This state of connection of images is designated as "continuity". Data of the image $C_1$ are stored in an area of the memory 17 where data of the image $D_1$ are stored.

An image $D_7$ belonging to the preceding scanned line is connected to a plurality of images $C_7$ and $C_8$ in the present scanned line, showing that images $D_7$, $C_7$ and $C_8$ belong to one image. This state is designated as "branch". The number of occurrences of this state is a measure of complexity of the shape of an image.

A plurality of images $D_8$ and $D_9$ in the preceding scanned line are connected to an image $C_9$ on the present scanned line, showing that the images $D_8$, $D_9$ and $C_9$ belong to one image. This state is designated as "convergence". As in the case of "branch", the number of occurrences of this state is another measure of complexity of the shape of an image. If the judgement results in the "convergence", those images that have been determined as belonging to other images are corrected in such a manner that they belong to one image.

A plurality of images $D_{10}$, $D_{11}$ and $D_{12}$ in the preceding scanned line are connected to a plurality of images $C_{10}$ and $C_{11}$ in the present scanned line, showing that $D_{10}$, $D_{11}$, $D_{12}$, $C_{10}$ and $C_{11}$ belong to one image. This state is designated as "mixture", which indicates a mixed state of the "branch" and "convergence". Therefore, processes of the "branch" and the "convergence" are performed alternately.

Next, explanation will be made as to several measuring methods. Parameters to be measured includes the number of images size (horizontal length, vertical length), area, and accumulation of areas and output values of the solid state image sensing device 3 as well as the complexity of the shape of an image.

(a) Complexity of the shape of image

The number of occurrences of the "branch" and the "convergence" is measured.

(b) Number of images

The number of occurrences of the "termination" is measured.

(c) Horizontal length

A maximum value of $(C_i^E - C_i^S + 1)$ from the occurrence of the "generation" to the occurrence of the "termination" is measured.

(d) Vertical length

The number of scanned lines from the occurrence of the "generation" to the occurrence of the "termination" is measured.

(e) Area

A sum of $(C_i^E - C_i^S + 1)$ from the occurrence of the "generation" to the occurrence of the "termination" is measured.

(f) Accumulated values of areas and output values of areas and output values of the solid state image sensing device.

A sum of the output values of $c_i{}^S - c_i{}^E$ from the occurrence of the "generation" to the occurrence of the "termination" is measured.

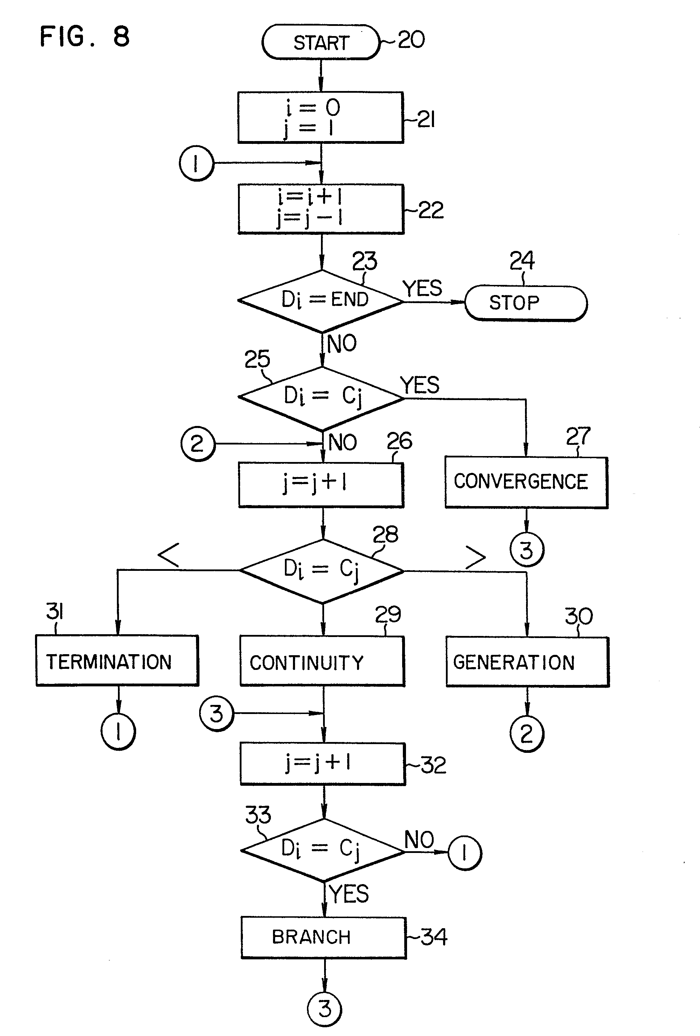

Fig. 8 is a flow chart of the measurement of the parameters in the image measuring system of Fig. 1, in particular, in the measuring circuit 5.

In Fig. 8, $D_i$ denotes a position of an i-th image from the left end in the preceding scanned line, while $C_j$ denotes a position of a j-th image from the left end in the n-th scanned line, i.e., the present scanning line.

When the process is started, the initialization of i=0, j=1 is done in a step 21. If the $D_i$ is a final position (END) in a step 23, the process is stopped. That is, the process for one line is finished (step 24). In a step 25, since j=0 just after the start, data of a measured object $C_0$ are set to be 0.

If $D_i=C_j$ in the step 25, it is judged as "convergence". In a step 26, j is added by 1. Then, in a step 28, $D_i$ and $C_j$ are compared with each other. If $D_i=C_j$, it is judged as "continuity". If $D_i > C_j$, it is judged as "generation". If $D_i < C_j$, it is judged as "termination". If it is judged as "continuity" in a step 29, j is added by 1 in a step 32. Then, in a step 33, $D_i$ and $C_j$ are compared with each other. If $D_i=C_j$, it is judged as "branch". In this case, in order to investigate if "branch" is occurring, the process is returned from ③ to the step 32, where j is further added by 1 and the relation of $D_i = C_j$ is examined.

By the process shown in Fig. 8, data for two lines are processed. Thereafter, the following data are read and the same process is repeated. In this manner, plurality of images contained in the object 1 can be measured continuously. As will be apparent from the process of Fig. 7, the "generation" is recognized if $D_{i-1} < C_{j+1}$, and $D_i > C_{j+1}$; the "termination" is recognized if $D_i \neq C_j$ ($D_i > C_j$) and $D_i < C_{j+1}$; the "continuity" is recognized if $D_i \neq C_j$ and $D_i = C_{j+1}$; the "convergence" is recognized if $D_{i-1} = C_j$ and $D_i = C_j$; the "branch" is recognized if $D_i \neq C_j$, $D_i = C_{j+1}$ and $D_i = C_{j+2}$, or $D_i = C_j$ and $D_i = C_{j+1}$.

If the measuring circuit 5 counts up every time when the above-mentioned conditions for the "branch" and the "convergence" are satisfied, the complexity of an image represented by the number of occurrences of the "branch" and "convergence" can be measured. Other parameters such as the number, horizontal length, vertical length, area and accumulated values can also be measured easily in the above-mentioned manner simultaneously.

The results of the measurement representing the physical features of individual objects are indicated digitally on the display section 6 in terms of, area, complexity of shape of each object, the number of objects.

Furthermore, the mean value or standard deviation of the values of these physical features may be displayed.

As described above, according to this invention, an object to be measured can be measured with an accurate focussing and without influence of illumination irregularity and output irregularity of an image sensing device of the line scan type. Therefore, accurate information on images can be obtained.

The image measuring system of the present invention is applicable, for example, to the examination of cells in blood to find out a disease based on the percentage of abnormal cells. The abnormal cells can be discriminated from normal cells by measuring an area of each cell and/or by determining the complexity of shape of each cell which exceeds an area range and/or complexity degree of the normal cell. For example, in the examination of T cells among lymph cells, red corpuscles of sheep is mixed in blood to be measured and the blood is incurvated. Since the red corpuscle of sheep has a property to gather around the T cells, the area of the T cells increases to a great extent, and at the same time, the complexity of the shape of the T cells increases due to the attachment of the red corpuscle of sheep around the T cells irregulary. Thus, the T cells can be easily discriminated from other cells and by counting the number of T cells, a patient whose T cells increased abnormally due to disease can be identified.

WHAT IS CLAIMED IS:

1.      An image measuring system for measuring the characteristics of plural objects from an image signal representing plural images of said plural objects, said system comprising:

a solid state image sensing device of the line scan type (3) having plural sensing elements aligned along a first direction;

primary scanning means (3') for primary scanning said solid state image sensing device in said first direction;

auxiliary scanning means (8) for auxiliary scanning said solid state image sensing device in a second direction perpendicular to said first direction;

an optical system (2) associated with said solid state image sensing device;

an automatic focussing means (7) for focussing said optical system;

output correcting means (4) for correcting the output irregularity of said image signal from said solid state image sensing device; and

measuring means (5) connected to receive the corrected image signal representing said plural images of said objects obtained by a single scanning of the whole surface of said plural objects, said measuring means (5) discriminating said plural images to determine the characteristics of said plural objects.

2.      An image measuring system according to claim 1 said automatic focussing means (7) including

calculating means (71) for calculating a sum value of differences between adjacent picture element signals contained in said image signal obtained by said primary scanning of said solid state image sensing means,

driving means (72) for moving said optical system (2) in response to a control signal to vary a distance between said objects (1) and said solid state image sensing device (3) attached to said optical system, and

control means (71) for providing said control signal in accordance with the sum value calculated in said calculating means (71) to adjust said distance between said solid state image sensing device (3) and said objects (1) such that

an initially set distance is varied to approach a correctly focussed distance with a first constant pitch (P) until said sum value calculated after the variation of the distance is smaller than that calculated before the variation of the distance,

(a) then to vary the last achieved distance with a second pitch smaller than said first pitch in the reverse direction until said sum value after the distance variation becomes smaller than that before the distance variation, or

(b) to vary the last achieved distance in the reverse direction by a distance corresponding to 1 to 1.5 times the first pitch (P) then to vary the distance in the forward direction with said second pitch until said sum value after the distance variation becomes smaller than that before the distance variation.

3.     An image measuring system according to claim 1 said output correction means (4) including:

means (45) for recording a first series of signals $(A_i)$ obtained by a primary scanning of a reference object,

subtracting means (42) for producing a difference between a second series of signals $(B_i)$ obtained in a primary scanning of said objects and said first series of signals $(A_i)$,

correction factor setting means (46) for producing a correction factor $(K/A_i)$ corresponding to a reciprocal of said first series of signals $(A_i)$ multiplied by a constant K, and

multiplying means (44) for multiplying said difference $(A_i - B_i)$ obtained from said subtracting means (42) by said correction factor $(K/A_i)$ to obtain an output corrected with respect to the output irregularity.

4.     An image measuring system according to claim 1, said measuring means (5) including:

means (11) for determining the presence of an image portion of any one of images of said objects by comparing each picture element signal in each series of picture element signals contained in said image signal

- 29 -

0099229

obtained in each primary scanning with a predetermined threshold (10),

means for determining that two adjacent picture element signals in each series of picture element signals represent a common image portion when both of said two adjacent picture element signals are above said predetermined threshold, and

means for discriminating whether an image portion determined in each primary scanning belongs to the same image by determining whether the image portion determined in one primary scanning is adjacent to at least a part of the image portion determined in the just preceding primary scanning.

5. An image measuring system according to claim 1, said measuring means (5) including:

means (11) for determining the presence of an image portion of any one of images of said objects when a picture element signal in each series of picture element signals obtained in each primary scanning is above a predetermined threshold,

means for classifying that

(a) one image portion determined in a primary scanning is in a continuity condition when said one image portion is connected with only one imge portion determined in a just preceding primary scanning,

(b) one image portion determined in a primary scanning is in a convergence condition when said one image portion is connected to at least two image portions determined in a just preceding primary scanning,

(c) at least two image portions in a primary scanning is in a branching condition when said at least two image portions are connected with only one image portion in a just preceding primary scanning,

(d) at least two image portions in a primary scanning is in a mixture condition when said at least two image portions are connected with at least two image portions determined in a just preceding primary scanning,

(e) an image portion in a primary scanning is in a generation condition when said image portion is not connected with any of image portions determined in a just preceding primary scanning, and

(f) an image portion in a primary scanning is in a termination condition when said image portion is not connected with any of image portions determined in a just succeeding primary scanning, wherein said classification into the (a), (b), (c), (d), (e) and (f) conditions; continuity, convergence, branching, mixing, generation and termination is achieved with two adjacent primary scannings successively to determine the physical features of each of images of said plurality of objects.

# FIG. 1

OBJECT TO BE MEASURED `1` → OPTICAL SYSTEM `2` → SOLID STATE IMAGE SENSING DEVICE OF LINE SCAN TYPE `3` → A/D CONVERTER `50` → OUTPUT IRREGULARITY CORRECTION CIRCUIT `4` → MEASURING CIRCUIT `5` → DISPLAY SECTION `6`

AUTOMATIC FOCUSSING MECHANISM `7`

SCANNING CIRCUIT `60`

AUTOMATIC TRAMSFER MECHANISM `8`

CONTROL UNIT `9`

1/6

0099229

# FIG. 2

```
          ┌─────────────┐              ┌─────────────────┐
   2 ─────│  OPTICAL    │─────────────▶│ SOLID STATE     │─ 3
          │  SYSTEM     │              │ IMAGE SENSING   │
          └─────────────┘              │ DEVICE          │
                 ▲                     └─────────────────┘
                 │                              │
                 │                              ▼
          ┌─────────────┐              ┌─────────────────┐
  72 ─────│  PULSE      │              │ A/D             │─ 50
          │  MOTOR      │              │ CONVERTER       │
          └─────────────┘              └─────────────────┘
                 ▲                              │
                 │          71                  │
                 │    ┌──────────────┐          │   7
                 └────│ MICRO-       │◀─────────┘
                      │ COMPUTER     │
                      └──────────────┘
```

# FIG. 3

DISTANCE BETWEEN THE OBJECTIVE LENS AND THE OBJECT

→ DRIVE NUMBER OF PULSE MOTOR

# FIG. 4

```
┌──────────────┐     ┌──────────┐     ┌────────┐  ┌───────────┐  ┌────────┐  ┌───────────┐     ┌───────────┐
│SOLID  STATE  │     │A/D       │     │        │  │SUBTRACTER │  │CHECK   │  │MULTIPLIER │     │MEASURING  │
│IMAGE  SENSING│ ──► │CONVERTER │ ──► │SWITCH  │─►│CIRCUIT    │─►│CIRCUIT │─►│CIRCUIT    │ ──► │CIRCUIT    │
│DEVICE        │     │          │     │        │  │           │  │        │  │           │     │           │
└──────────────┘     └──────────┘     └────────┘  └───────────┘  └────────┘  └───────────┘     └───────────┘
        3                 50             41             42            43            44               5
```

```
                        ┌───────────┐     ┌────────────┐
                        │REFERENCE  │     │CORRECTION  │
                        │DATA       │ ──► │FACTOR      │
                        │MEMORY     │     │SETTING     │
                        │           │     │CIRCUIT     │
                        └───────────┘     └────────────┘
                             45                 46
                                          ┌────────────┐
                                          │CORRECTION  │
                                          │FACTOR      │  47
                                          │MEMORY      │
                                          └────────────┘
```

4

0099229

# FIG. 5

CONTROL UNIT — 9

5

IMAGE SENSING DEVICE — 3

A/D CONVERTER — 50

OUTPUT IRREGU-LARITY CORRECTION — 4

THRESHOLD 10

COMPARISON CIRCUIT — 11

ADDRESS COUNTER — 12

START COUNTER — 13

END COUNTER — 14

IMAGE NUMBER COUNTER — 15

AREA COUNTER — 16

MEMORY — 17

CPU — 18

FIG. 6A

FIG. 6B

IMAGE SENSOR ELEMENT NUMBER

FIG. 7A

FIG. 7B

FIG. 8